# EUROPÄISCHE PATENTSCHRIFT

(11) **EP 1 900 866 B1**
(45) Veröffentlichungstag und Bekanntmachung des Hinweises auf die Patenterteilung: **16.12.2009**
(21) Anmeldenummer: 07016404.1
(22) Anmeldetag: 22.08.2007
(51) Int. Cl.: D06F 37/26, D06F 39/14, B29C 70/86

(54) **Faltenbalg für eine Wäschebehandlungsmaschine wie Waschmaschine oder Waschtrockner**
Bellows for a laundry treatment machine such as a washing machine or a dryer
Manchette pour une machine de traitement du linge comme un lave-linge ou un sèche-linge

(30) Priorität: 14.09.2006 DE 102006043922
(43) Veröffentlichungstag der Anmeldung: 19.03.2008
(73) Patentinhaber: Miele & Cie. KG, 33332 Gütersloh (DE)
(72) Erfinder: Hellhake, Wolfgang, 59555 Lippstadt (DE)

(56) Entgegenhaltungen:
- DE-A1- 19 637 206
- DE-A1- 19 822 465
- DE-B3- 10 237 017
- DE-B3- 10 358 941

## Beschreibung

Die Erfindung betrifft einen Faltenbalg für eine Wäschebehandlungsmaschine, wie Waschmaschine oder Waschtrockner mit einem Gehäuse mit einer durch eine Tür verschließbaren Gehäuseöffnung und einem im Gehäuse schwingbeweglich angeordnetem Laugenbehälter mit einer mit der Gehäuseöffnung im wesentlichen fluchtenden Beschickungsöffnung, wobei der einstückig aus einem Elastomer geformte Faltenbalg in einem Spalt zwischen der Gehäuseöffnung und Beschickungsöffnung im Behälter angeordnet ist, der eine Schwingungsfalte und einen rohrförmigen Bereich umfasst, an dessen freien Schenkelenden jeweils Befestigungsabschnitte für eine Anbindung an der Beschickungsöffnung am Behälter einerseits und an der Gehäuseöffnung andererseits vorgesehen sind.

Aus dem Stand der Technik sind derartige Faltenbalgringe bzw. Manschetten bekannt, die insbesondere den Spalt zwischen dem federnd gelagerten Laugenbehälter, wie dies bei der Waschmaschine der Fall ist, und dem Öffnungsbereich in der Frontwand des Maschinengehäuses dichtend überbrücken. Der Faltenbalg als solches übernimmt einmal die Aufgabe, dass die geschlossene Tür dichtend anliegt, und wobei andererseits die auftretenden Schwingungen des Laugenbehälters, in dem die drehbar gelagerte Trommel angeordnet ist, übertragen werden, ohne dass hier Dichtungsprobleme auftreten.

Eine derartiger Faltenbalg ist hier beispielsweise aus der DE 37 38 388 C2 bekannt, der zwischen der Beschickungsöffnung und dem Laugenbehälter angeordnet ist, und mit einer Schwingungsfalte sowie einem rohrförmigen Bereich ausgestattet ist. Dabei ist der Faltenbalg derart angeordnet, dass der rohrförmige Bereich zum Laugenbehälter weisend angeordnet ist, wobei die Schwingungsfalte zur Beschickungsöffnung der Frontseite des Maschinengehäuses ausgerichtet ist. Der in der Druckschrift des Standes der Technik beschriebene Faltenbalg ist aus einem Elastomer einstückig hergestellt und weist insbesondere an den Einbindungsstellen Profilierungen auf, die eine feste Einbindung an dem Laugenbehälter einerseits bzw. an der Frontseite andererseits gewährleisten.

Weiter zeichnen sich die aus dem Stand der Technik bekannten Manschetten bzw. Faltenbälge insbesondere dadurch aus, dass der aus Elastomer geformte Körper zur Schwingungsdämpfung besonders ausgestattet ist. So ist beispielsweise aus der DE 43 42 708 C1 ein Faltenbalg bekannt, der zur Schwingungsdämpfung mehrlagig ausgebildet ist, um auf diese Weise eine Versteifung des elastomeren Körpers zu erreichen. Eine andere Ausbildung zeigt die DE 198 22 465 A1, die zur Schwingungsdämpfung einen Faltenbalg vorsieht, der mit einer Gitterstruktur als Stützteil versehen ist, welches von einem feuchtigkeitsundurchlässigen, biegsamen Schlauchteil umhüllt ist. Eine andere Variante ist im Stand der Technik gemäß der DE 196 37 206 A1 beschrieben, wobei zur Schwingungsdämpfung die Grundform des Schlauchkörpers mit Wandabschnitten versehen ist, die bei Schwingungen des Laugenbehälters während des Schleuderganges aufeinander schlagen können. Dadurch erhält der hochelastische Werkstoff eine Abstandsvergrößerung zwischen der Öffnung des Gehäuses und des Laugenbehälters.

In der US 2005/0262879 A1 ist ein Faltenbalg offenbart, der im Bereich der Falte zusätzlich radial ausgerichtete angeformte Stege umfasst. Aus der DE 103 59 614 A1 ist es bekannt, im Bereich einer Knickstelle eine umlaufende Wulst anzuformen, um die Verformung des Faltenbalges zu begrenzen.

Als nachteilig bei den aus dem Stand der Technik bekannten Faltenbälgen, Faltenbalgringen oder Manschetten wird es angesehen, dass diese Bauteile bei häufiger Benutzung der Wäschebehandlungsmaschine zerstört werden können. So ist es unvermeidbar, dass beispielsweise die Faltenbälge Löcher, Risse, Schnitte oder abgerissene Dichtlippen aufweisen, die beispielsweise durch scharfe Teile im Beschickungsbereich oder durch Scheuern am Kontergewicht verursacht werden. Dies kann zu unerwünschtem Wasserauslauf und daraus folgende Wasserschäden führen. Insbesondere werden die Faltenbälge bei Wäschebehandlungsmaschinen im gewerblichen Bereich, wie z. B. Waschsalons, durch unsachgemäße Behandlung besonders strapaziert.

Der Erfindung liegt somit die Aufgabe zugrunde, einen Faltenbalg für eine Wäschebehandlungsmaschine bereitzustellen, der eine verbesserte Verschleißfestigkeit und Haltbarkeit aufweist.

Erfindungsgemäß wird dieses Problem mit den Merkmalen des Anspruchs 1 gelöst; vorteilhafte Ausgestaltungen und Weiterbildungen der Erfindungen ergeben sich aus den nachfolgenden Unteransprüchen.

Die mit der Erfindung erreichbaren Vorteile bestehen darin, dass der Faltenbalg aus einem Verbundwerkstoff hergestellt ist, der eine hinreichende Verschleißminimierung herbeiführt und eine erhöhte Haltbarkeit aufweist. Als Grundmaterial wird ein flächiges Armierungsmittel in der gesamten Fläche oder nur in besonders gefährdeten Teilbereichen vorgesehen, und einseitig oder beidseitig mit einem Elastomer umspritzt. Auf diese Weise ist das Armierungsmittel im Material des Faltenbalgs integriert. Die Einbindung des Armierungsmittels bringt insbesondere den Vorteil, dass keine oder wenige Ausfälle wegen Beschädigung des Faltenbalgs hervorgerufen werden. Dadurch besteht eine geringe Gefahr von Folgeschäden, wie Wasserschäden. Zudem wird auch das Wasserschutzsystem verbessert, wodurch die Qualität angehoben, die Langlebigkeit verbessert und die Sicherheit erhöht wird.

Für eine einfache Herstellung ist es zweckmäßig, das Armierungsmittel aus zumindest einer Gewebematte bereitzustellen. Hierbei kann aus einer vorgefertigten Gewebematte die entsprechende Form für das Armierungsmittel ausgeschnitten werden. Dabei ist es vorteilhaft, ein dünnes Kunststofffasergewebe zu verwenden, welches ein verringertes Dehnverhalten gegenüber dem Elastomermaterial aufweist. Auf diese Weise wird sichergestellt, dass kraftmäßige Einwirkungen von spitzen Gegenständen auf die Wandungen des Faltenbalgs diesen nicht durchdringen und deshalb keine Löcher oder Risse verursachen. Dabei ist es vorteilhaft, für die Matte ein engmaschiges Gewebe zu verwenden.

In einer weiteren Ausführung ist die Gewebematte aus einem dünnen Karbon-, Kevlar- oder Mylargewebe, und das Elastomer aus einem EPDM oder einem Silikonkautschuk gebildet. Die Gewebematte aus den genannten Materialien lässt sich besonders einfach mit dem genannten Elastomermaterial umspritzen bzw. in das Material integrieren.

In einer vorteilhaften Ausführung bestreicht die Gewebematte die gesamte Fläche des Faltenbalgs. Auf diese Weise wird der ebene Bereich und die Schwingfalte verstärkt.

In einer zweckmäßigen Ausführung bestreicht die Gewebematte bereichsweise nur die Stellen im Faltenbalg, die besonders beansprucht werden. Dies ist im rohrförmigen Bereich der Fall, da dieser Bereich am häufigsten mit der Wäsche in Kontakt kommt bzw. beim Be- und Entladen berührbar ist. Deshalb ist es zweckmäßig, die Gewebematte umlaufend im rohrförmigen Bereich anzuordnen. Das Biegeverhalten der Schwingfalte wird nicht beeinträchtigt, da in dieser Ausführung die Schwingfalte frei von Armierungsmitteln ist.

Wenn die Anforderungen an die Chemikalien- Licht- und Temperaturbeständigkeit es zulassen, ist es in einer weiteren Ausführung vorteilhaft, die Gewebematte nur einseitig mit einer Fläche im Elastomer einzubinden. In dieser Ausführung ist sie zumindest teilweise sichtbar im Innenbereich der Beschickungsöffnung angeordnet. Auf diese Weise wird die Abriebfestigkeit in den stark beanspruchten Bereichen verbessert. Ferner wird damit dem Benutzer der Vorteil des Armierungsmittels optisch dargestellt.

In einer Weiterbildung der Erfindung besteht das Armierungsmittel aus mehreren Gewebematten. In dieser Ausführung können einzelne Gewebematten innerhalb des Faltenbalgs nebeneinander oder bereichsweise überlappend angeordnet werden. Die Geweberichtung kann den unterschiedlichen Anforderungen an Festigkeit oder Dehnvermögen innerhalb des Faltenbalgs optimal angepasst werden.

Ein Ausführungsbeispiel der Erfindung wird anhand der nachstehenden Figuren 1 bis 5 näher erläutert; dabei zeigen:
- Figur 1: eine Seitenansicht in Schnittdarstellung einer Waschmaschine;
- Figur 2: eine isolierte Darstellung eines Faltenbalgs, Faltenbalgrings bzw. Manschette in der perspektivischen geschnittenen Darstellung;
- Figur 3: eine geschnittene Darstellung der Schwingungsfalte eines Faltenbalgs und
- Figur 4: eine weitere Ausführungsform gemäß der Erfindung eines Faltebalgs ebenfalls dargestellt in der geschnittenen perspektivischen Darstellung.

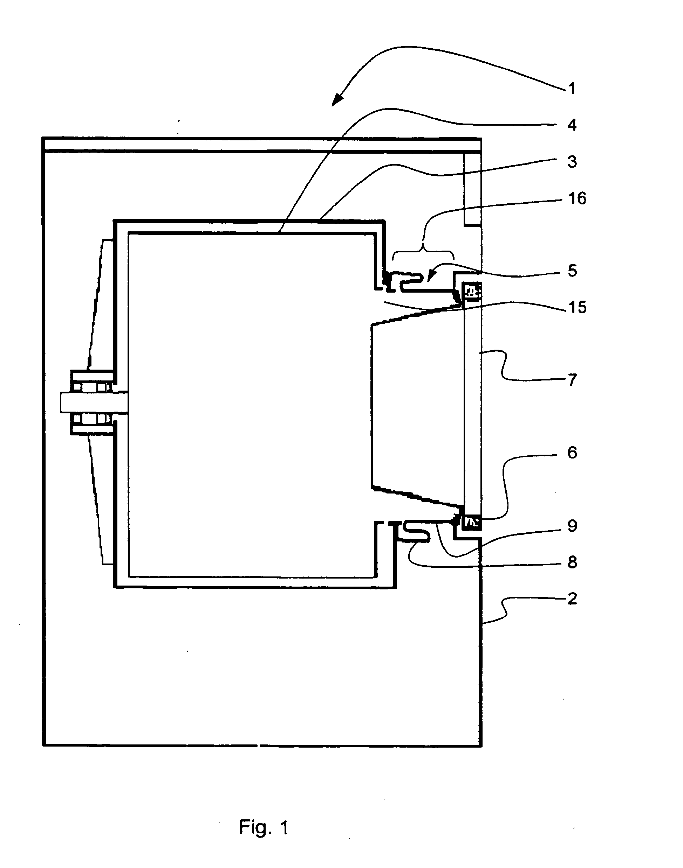

Die Figur 1 zeigt in der geschnittenen Seitenansicht eine Waschmaschine 1, wobei in einem Maschinengehäuse 2 ein Laugenbehälter 3 mit einer darin drehbar gelagerten Trommel 4 schwingbeweglich angeordnet ist. Wie aus der geschnittenen Ansicht zu erkennen ist, ist ein Faltenbalg 5 zwischen der Öffnung 15 im Behälter 3 und der Öffnung 6 in der Frontwand des Maschinengehäuses 2 angeordnet. Der Faltenbalg 5 überbrückt somit den Spalt 16 vom schwingungsgelagerten Behälter 3 zum feststehenden Maschinengehäuse 2, wobei der Faltenbalg 5 ferner eine dichtende Anlage einer Tür 7 bereitstellt.

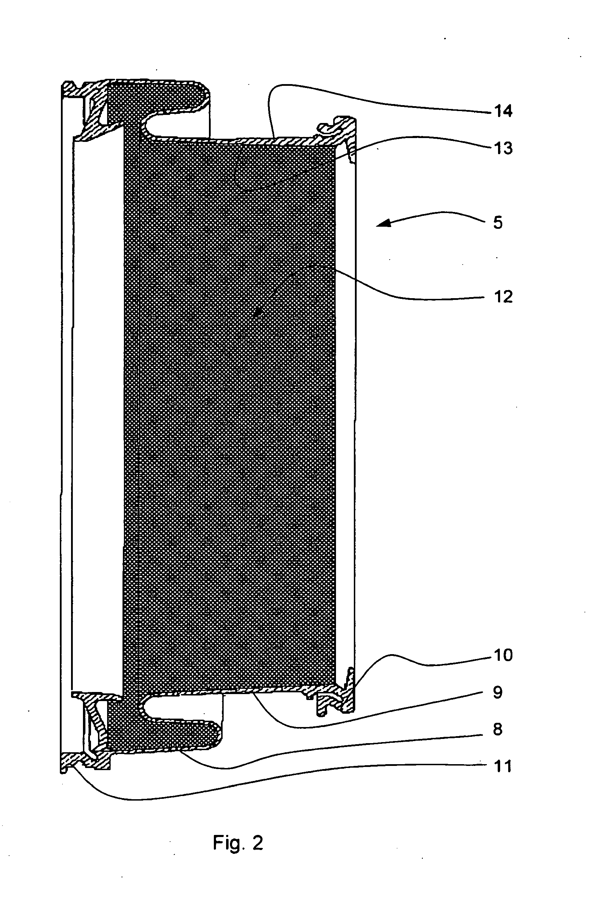

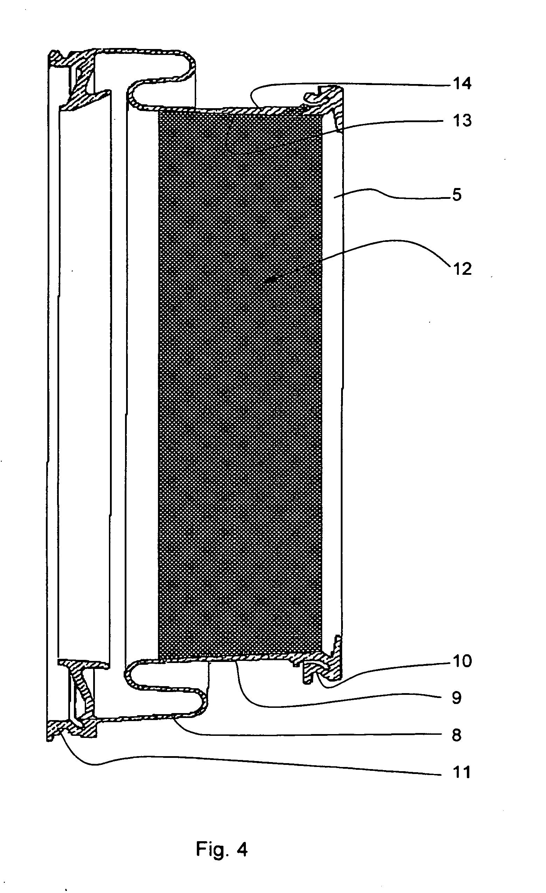

Der Faltenbalg 5, dargestellt in den Einzelansichten der Figuren 2 und 4, ist aus einem Elastomer einstückig hergestellt und umfasst eine Schwingungsfalte 8, die zum Laugenbehälter 3 (Fig. 1) weisend angeordnet ist, sowie einen rohrförmigen Bereich 9, der zum Maschinengehäuse 2 (Fig. 1) hin ausgerichtet ist. Die umgekehrte Anordnung von Schwingfalte 8 und rohrförmigen Bereich 9 ist abhängig von den Gegebenheiten auch möglich. An den freien Schenkelenden des Faltenbalgs 5 sind jeweils profilierte Befestigungsabschnitte 10 und 11 angeformt, die insbesondere für eine stabile Anbindung an den Rand der Öffnung 15 des Behälters 3 (Fig. 1) einerseits und an der Gehäuseöffnung 6 (Fig. 1) andererseits dienen. Wie aus den Figuren 2 und 4 zu erkennen ist, ist der einstückig geformte Faltenbalg 5 mit einem Armierungsmittel 12 versehen. Das Armierungsmittel 12 besteht hierbei aus einer umlaufenden Gewebematte 13, die vorzugsweise aus einem dünnen Kunststofffasergewebe, beispielsweise Kevlar oder Mylarmar gebildet ist. Das Elastomer 14 besteht vorzugsweise aus einem EPDM oder einem Silikonkautschuk.

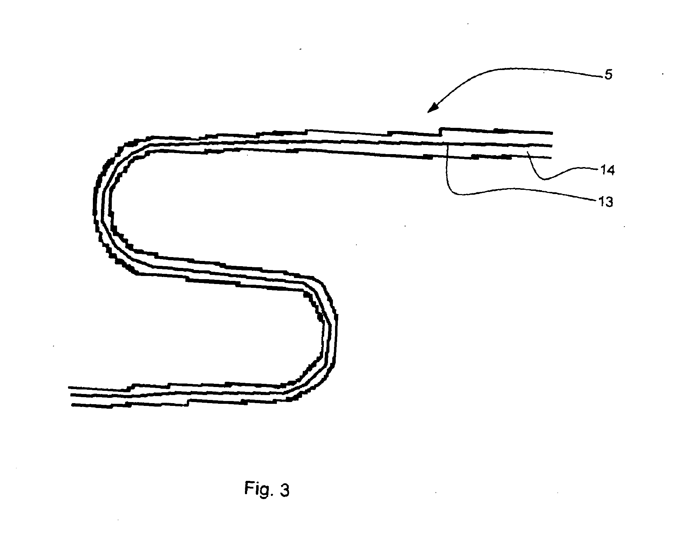

Die Figur 2 zeigt hier die Ausführungsform, in der die Gewebematte 13 die gesamte Erstreckungsfläche des Faltenbalgs 5 bestreicht, wobei insbesondere hier sowohl der rohrförmige Bereich 9 als auch der Schwingungsfaltenbereich 8 mit dieser Gewebematte 13 versehen ist. Eine entsprechende Schnittdarstellung zeigt die Figur 3, in der zu erkennen ist, dass die Gewebematte 13 vollständig in dem elastomeren Material 14 eingebunden ist.

Gemäß einer anderen Ausführungsform, dargestellt in der Figur 4, ist die Gewebematte 13 nur bereichsweise im Faltenbalg 5 angeordnet, wobei hierbei vorzugsweise die Gewebematte 13 nur im elastomeren Material 14 des rohrförmigen ebenen Bereichs 9 des Faltenbalgs 5 angeordnet ist. Die Schwingfalte 8 ist in dieser Ausführung frei von Armierungsmittel und wird deshalb hinsichtlich der Beweglichkeit nicht beeinträchtigt.

Wie in Fig. 2 und 4 zu dargestellt, ist es in einer Weiterbildung des verschleißresistenten Faltenbalgs 5 vorgesehen, dass die Gewebematte 13 nur einseitig mit dem Elastomer 14 versehen ist bzw. einseitig frei liegt. Beim Be- und Entladen der Wäschebehandlungsmaschine 1 (Fig. 1) bzw. im Betrieb kommt hierbei die Wäsche nur mit der Gewebematte 13 in Kontakt, so dass der Faltenbalg 5 gegen Abrieb geschützt ist. Es ist auch möglich, die Gewebematte 13 im Bereich der Türdichtung zu integrieren, um eine dauerhafte Elastizität bzw. ein gutes Rückstellvermögen der Dichtlippe bereitzustellen.

## Patentansprüche

1. Faltenbalg für eine Wäschebehandlungsmaschine (1), wie Waschmaschine oder Waschtrockner mit einem Gehäuse (2) mit einer durch eine Tür (7) verschließbaren Gehäuseöffnung (6) und einem im Gehäuse (2) schwingbeweglich angeordnetem Laugenbehälter (3) mit einer mit der Gehäuseöffnung (6) im wesentlichen fluchtenden Beschickungsöffnung (15), wobei der einstückig aus einem Elastomer (14) geformte Faltenbalg (5) in einem Spalt (16) zwischen der Gehäuseöffnung (6) und Beschickungsöffnung (15) im Behälter (3) angeordnet ist, der eine Schwingungsfalte (8) und einen rohrförmigen Bereich (9) umfasst, an dessen freien Schenkelenden jeweils Befestigungsabschnitte (10, 11) für eine Anbindung an der Beschickungsöffnung (15) am Behälter (3) einerseits und an der Gehäuseöffnung (6) andererseits vorgesehen sind,
**dadurch gekennzeichnet,**
**dass** in dem Faltenbalg (5) zumindest bereichsweise ein flächiges Armierungsmittel (12) integriert ist, wobei das Armierungsmittel (12) aus zumindest einer Gewebematte (13) besteht.

2. Faltenbalg nach Anspruch 1,
**dadurch gekennzeichnet,**
**dass** die Gewebematte (13) vorzugsweise aus einem dünnen Kunststofffasergewebe besteht, welches eine verringertes Dehnverhalten gegenüber dem Elastomer (14) besitzt.

3. Faltenbalg nach Anspruch 2,
**dadurch gekennzeichnet,**
**dass** die Gewebematte (13) vorzugsweise aus einem dünnen Karbon-, Kevlar- oder Mylargewebe gebildet ist, und wobei das Elastomer (14) aus einem EPDM, oder einem Silikonkautschuk besteht.

4. Faltenbalg nach einem der Ansprüche 1 bis 3,
**dadurch gekennzeichnet,**
**dass** die Gewebematte (13) die gesamte Fläche des Faltenbalgs (5) bestreicht.

5. Faltenbalg nach Anspruch 4,
**dadurch gekennzeichnet,**
**dass** die Gewebematte (13) umlaufend im rohrförmigen Bereich (9) des Faltenbalgs (5) angeordnet ist.

6. Faltenbalg nach Anspruch 5,
**dadurch gekennzeichnet,**
**dass** die Gewebematte (13) einseitig mit dem Elastomer (14) versehen ist.

7. Faltenbalg nach einem der Ansprüche 1 bis 6,
**dadurch gekennzeichnet,**
**dass** das Armierungsmittel (12) aus mehreren Gewebematten (13) besteht.

## Claims

1. Bellows for a laundry treatment appliance (1), such as a washing machine or a washer-dryer, comprising a housing (2) having a housing opening (6), which can be closed by a door (7), and a washing container (3) which is arranged in the housing (2) so as to be movable in a vibrating manner and has a feed opening (15) which is substantially aligned with the housing opening (6), the bellows (5) formed in one piece from an elastomer (14) being arranged in a gap (16) between the housing opening (6) and the feed opening (15) in the container (3) and comprising a vibration fold (8) and a tubular region (9), at each free leg end of which fastening portions (10, 11) are provided for connection to the feed opening (15) in the container (3) on the one hand and to the housing opening (6) on the other,
**characterised in that**
a planar reinforcing means (12) is integrated into the bellows (5) at least in regions, the reinforcing means (12) being composed of at least one woven fabric mat (13).

2. Bellows according to claim 1,
**characterised in that**
the woven fabric mat (13) is preferably composed of a thin plastics material fibre woven material which has reduced elongation characteristics in comparison to the elastomer (14).

3. Bellows according to claim 2,
**characterised in that**
the woven fabric mat (13) is preferably formed from a thin carbon, Kevlar or Mylar woven fabric, the elastomer (14) being composed of an EDPM or a silicone rubber.

4. Bellows according to any one of claims 1 to 3,
**characterised in that**
the woven fabric mat (13) covers the entire surface of the bellows (5).

5. Bellows according to claim 4,
**characterised in that**
the woven fabric mat (13) is arranged circumferentially in the tubular region (9) of the bellows (5).

6. Bellows according to claim 5,
**characterised in that**
one side of the woven fabric mat (13) is provided with the elastomer (14).

7. Bellows according to any one of claims 1 to 6,
**characterised in that**
the reinforcing means (12) is composed of a plurality of woven fabric mats (13).

## Revendications

1. Soufflet pour une machine de traitement du linge (1) telle que lave-linge ou laveur-sécheur, avec un carter (2) avec une ouverture de carter (6) pouvant être fermée par une porte (7) et une cuve (3) disposée de façon mobile en oscillation dans le carter (2), avec une ouverture de chargement (15) essentiellement en affleurement avec l'ouverture de carter (6), le soufflet (5) formé d'une seule pièce à partir d'un élastomère (14) étant disposé dans la cuve (3) dans un interstice (16) entre l'ouverture de carter (6) et l'ouverture de chargement (15) qui comprend un pli de vibration (8) et une zone tubulaire (9), au niveau des extrémités de branche libres duquel des segments de fixation (10, 11) sont respectivement prévus pour une liaison avec l'ouverture de chargement (15) sur la cuve (3) d'une part et sur l'ouverture de carter (6) d'autre part,
**caractérisé en ce que**, dans le soufflet (5), un moyen d'armature (12) étendu est intégré au moins par zones, le moyen d'armature (12) se composant au moins d'une natte de tissu (13).

2. Soufflet selon la revendication 1,
**caractérisé en ce que** la natte de tissu (13) se compose de préférence d'un mince tissu de fibres en matière plastique qui possède un comportement d'extension réduit par rapport à l'élastomère (14).

3. Soufflet selon la revendication 2,
**caractérisé en ce que** la natte de tissu (13) est de préférence formée d'un mince tissu de carbone, de kevlar ou de mylar, et l'élastomère (14) se compose d'un EPDM ou d'un caoutchouc de silicone.

4. Soufflet selon l'une quelconque des revendications 1 à 3,
**caractérisé en ce que** la natte de tissu (13) couvre toute la surface du soufflet (5).

5. Soufflet selon la revendication 4,
**caractérisé en ce que** la natte de tissu (13) est disposée de façon périphérique dans la zone tubulaire (9) du soufflet (5).

6. Soufflet selon la revendication 5,
**caractérisé en ce que** la natte de tissu (13) est munie de l'élastomère (14) sur un côté.

7. Soufflet selon l'une quelconque des revendications 1 à 6,
**caractérisé en ce que** l'agent d'armature (12) se compose de plusieurs nattes de tissu (13).
